# EUROPÄISCHE PATENTANMELDUNG

(11) **EP 4 464 551 A1**
(43) Veröffentlichungstag der Anmeldung: **20.11.2024**
(21) Anmeldenummer: 24174749.2
(22) Anmeldetag: 08.05.2024
(51) Int. Cl.: B60N 2/50, B60N 2/52, F16F 9/46, F16F 9/50

(54) **FAHRZEUGSITZ MIT LUFTFEDER UND DÄMPFERELEMENT**

(30) Priorität: 15.05.2023 DE 102023112706
(71) Anmelder: GRAMMER AG, 92289 Ursensollen (DE)
(72) Erfinder: Dotzler, Florian, 92242 Hirschau (DE)
(74) Vertreter: Hannke, Christian

(57) **Zusammenfassung**

Fahrzeugsitz, insbesondere für Nutzfahrzeuge, mit einem Oberteil (3) und einem Unterteil (4) und mit mindestens einer Luftfeder (7), die eine federnde Wirkung auf eine zwischen Ober- und Unterteil (3, 4) sich verändernde Höhenabstandsbewegung (12) ausübt, und mit mindestens einem Dämpferelement (11), das die sich verändernde Höhenabstandsbewegung (12) dämpft, wobei die Luftfeder (7) an einem Luftfederausgang (7a) mit einer Verstelleinrichtung (15) zum Verstellen eines Dämpferhärtegrads des Dämpferelementes (11) verbunden ist, wobei der Dämpferhärtegrad mittels eines Luftdrucks der Luftfeder (7) einstellbar und veränderbar ist.

## Beschreibung

Die Erfindung betrifft einen Fahrzeugsitz, insbesondere für Nutzfahrzeuge, mit einem Oberteil und einem Unterteil und mit mindestens einer Luftfeder sowie einem Dämpferelement gemäß dem Oberbegriff des Patentanspruches 1.

Fahrzeugsitze mit Luftfedern und Dämpferelementen sind aus dem Stand der Technik hinreichend bekannt. Bekannterweise dient die Luftfeder dazu, in einem Fahrzeugsitz die federnde Wirkung bei einer Auf- und Abwärtsbewegung d es Fahrzeugsitzes herbeizuführen. Das Dämpferelement dient dazu, diese Federbewegung abzudämpfen.

Bisher werden derartige Dämpferelemente, die häufig als Vertikaldämpfer eingebaut werden, mit einem festen Dämpferhärtegrad eingebaut, der entweder gar nicht veränderbar ist, oder lediglich mittels einer Handbetätigung direkt an dem Dämpferelement die Wahl zwischen zwei Dämpferhärtegraden zulässt. Auf diese Weise konnte bisher ein schwerer Fahrer, der einen derartigen Fahrzeugsitz belegt, einen härteren Dämpferhärtegrad einstellen, um nicht bei einer großen Schwingung, die von außen beispielsweise bei Durchfahren eines Schlagloches in das Fahrzeugsitzsystem eingeleitet wird, in den Endanschlag der Luftfeder und des Dämpferelements zu kommen.

Nachteilhaft ist eine derart vorab eingestellte Dämpferhärte beziehungsweise ein derart eingestellter Dämpferhärtegrad während der nachfolgenden Fahrt bei sämtlichen verschiedenen infrage kommenden Betriebszuständen immer fest eingestellt. Dies hat zur Folge, dass zwar eine Vorabeinstellung des Dämpferhärtegrads vor Beginn einer Fahrt möglich ist, jedoch sich dieser Dämpferhärtegrad während der Fahrt nicht ändert und somit nicht berücksichtigt werden kann, welche Dämpferwirkung abhängig von den verschiedenen Untergründen, die das Fahrzeug befährt, als notwendig erachtet werden, um eine optimale gefederte Schwingungsbewegung und Dämpferwirkung innerhalb des Fahrzeugsitzes zu erreichen.

Demzufolge ist es Aufgabe der Erfindung, einen Fahrzeugsitz mit einer Luftfeder und einem Dämpferelement zur Verfügung zu stellen, welcher es ermöglicht, auch während des Betriebszustandes eines Fahrzeuges und des dazugehörigen Fahrzeugsitzes einen Dämpferhärtegrad laufend an die jeweiligen Gegebenheiten anzupassen.

Diese Aufgabe wird durch die Merkmale des Patentanspruches 1 gelöst.

Ein wesentlicher Punkt der Erfindung ist es, dass bei einem Fahrzeugsitz, insbesondere für Nutzfahrzeugsitze, mit einem Oberteil und einem Unterteil und mit mindestens einer Luftfeder, die eine federnde Wirkung auf eine zwischen Ober- und Unterteil sich verändernde Höhenabstandsbewegung ausübt, und mit mindestens einem Dämpferelement, das die sich verändernde Höhenabstandsbewegung dämpft, die Luftfeder an einem Luftfederausgang mit einer Verstelleinrichtung zum Verstellen eines Dämpferhärtegrads des Dämpfelementes verbunden ist. Hierbei ist der Dämpferhärtegrad mittels eines Luftdrucks der Luftfeder einstellbar und veränderbar.

Eine derartige Kopplung der Luftfeder mit dem Dämpferelement ist bisher nicht bekannt. Es besteht somit eine direkte Verbindung zwischen der Luftfeder und dem Dämpferelement. Dies hat zur Folge, dass der Luftdruck innerhalb der Luftfeder vorteilhaft dafür genutzt werden kann, eine anfängliche passende Einstellung des Dämpferhärtegrads in Abhängigkeit von dem Gewicht eines Fahrers, der diesen Fahrzeugsitz gerade belegt, vorzunehmen. Denn der Luftdruck innerhalb der Luftfeder ist bekanntlich ein Indikator für die jeweilige Auflast am Sitz beziehungsweise das Gewicht eines Fahrers. Dieser Indikator wird somit als Stellgröße für die Dämpfereinstellung und somit den Dämpferhärtegrad hergenommen.

Die Verbindung zwischen der Luftfeder und der Verstelleinrichtung eines Vertikaldämpfereinstellmechanismus wird hierfür vorzugsweise mittels einer Pneumatikschlauchverbindung und gegebenenfalls einer zusätzlichen Ventileinrichtung realisiert beziehungsweise umgesetzt. Somit ist zwischen dem Luftfederausgang und der Verstelleinrichtung ein Luftdruckschlauch, der zur Luftdruckregulierung einen bestimmten Durchmesser oder in seinem Verlauf unterschiedliche Durchmesser haben kann und je nach Verwendung auch eine unterschiedliche Schlauchlänge aufweisen kann, mit einem ersten Ende an dem Luftfederausgang und mit einem zweiten Ende an einem Eingang einer Ventileinrichtung angeordnet.

Diese Ventileinrichtung mit einem ein- und ausfahrbaren Kolben dient dazu, mit der Verstelleinrichtung wechselzuwirken. Herkömmliche Dämpferelemente weisen nämlich einen außenseitig angebrachten schwenkbaren Hebelarm auf, dessen momentane Schwenkposition jeweils einem Dämpferhärtegrad des Dämpferelementes zugeordnet ist. Derartige Dämpferelemente sind serienmäßig erhältlich.

Durch die Verwendung einer Ventileinrichtung mit einem Kolben und die Kopplung mit der Luftfeder mittels des Luftdruckschlauches ist es nun möglich, dass durch Ein- und Ausfahren des Kolbens der Ventileinrichtung dieser schwenkbare Hebel/Hebelarm in seiner Schwenkposition verändert werden kann und sich somit unterschiedliche Dämpferhärtegrade innerhalb des Dämpferelementes einstellen lassen, abhängig davon, in welcher Schwenkposition sich der Hebelarm momentan befindet.

Hierfür weist die Ventileinrichtung den bereits erwähnten mindestens einen Kolben auf, der durch Ein- und Ausfahren den schwenkbaren Hebelarm in seiner Schwenkposition verändern kann. Die Ventileinrichtung weist zudem eine Rückstellfeder zum selbstständigen Einfahren des Kolbens bei Unterschreiten einer voreinstellbaren Untergrenze des Luftdrucks innerhalb des Luftdruckschlauchs und der Luftfeder auf. Die Verwendung einer Rückstellfeder ermöglicht, dass der Kolben erst ab einer bestimmten Luftdruckuntergrenze innerhalb der Ventileinrichtung bewegt wird. Beispielsweise kann hierdurch ermöglicht werden, dass bei Belegen des Fahrzeugsitzes mit einem leichten Fahrer von beispielsweise 40-50 Kilogramm Eigengewicht keine Veränderung des Dämpferhärtegrades erfolgt und somit das Dämpferelement in seiner Grundeinstellung "weiche Dämpfung" verbleibt. Da ein derartiger leichter Fahrer einen geringeren Luftdruckaufbau innerhalb der Luftfeder und damit innerhalb des Luftdruckschlauches zur Folge hat, wird sich somit der Kolben aufgrund der Rückstellfederkraft nicht bewegen und keine Dämpferhärtegradveränderung stattfinden.

Sofern sich jedoch ein schwerer Fahrer mit beispielsweise 90-100 Kilogramm auf den Fahrzeugsitz setzt, wird die Luftdruckfeder einen größeren Druckaufbau verspüren und es entsteht somit ein größerer Luftdruck innerhalb des Luftdruckschlauches. Dies führt dazu, dass die bereits erwähnte voreinstellbare Untergrenze eines Luftdrucks innerhalb des Luftdruckschlauches für das Auslenken der Rückstellfeder und damit das Auslenken des Kolbens innerhalb der Ventileinrichtung überschritten wird und somit aufgrund des sich bewegenden Kolbens, der gegen den Hebelarm beziehungsweise einen Einstellpin des Dämpferelementes gedrückt wird, eine Veränderung des Dämpferhärtegrads des Dämpferelementes stattfindet. Hierdurch findet eine Veränderung der Dämpfereinstellung von "weiche Dämpfung" auf "mittlere Dämpfung" oder "harte Dämpfung" statt. Sämtliche Zwischenzustände sind denkbar und können abhängig von der momentanen Schwenkposition des Hebelarms aufgrund des unterschiedlichen Ein- und Ausfahrens des Kolbens eingenommen werden.

Bevorzugt werden der Durchmesser des Luftdruckschlauches und dessen Länge derart gewählt, dass sich eine optimale Abstimmung zwischen dem sich verändernden Luftdruck in der Luftfeder und dem sich verändernden Dämpferhärtegrad innerhalb des Dämpferelementes in Abhängigkeit von den verschiedenen Zuständen des Fahrzeugsitzes einstellt. Selbstverständlich kann durch Verwendung eines Luftdruckschlauches mit einem größeren Durchmesser ein anderer Luftdruck und eine andere Wirkung auf den Kolben der Ventileinrichtung bewirkt werden, als bei Verwendung eines Luftdruckschlauches mit einem kleineren Durchmesser. Gleiches gilt auch für eine Kolbenbodenfläche des Kolbens der Ventileinrichtung, die auch unterschiedlich groß sein kann. Ebenso kann die Ventileinrichtung mit dem Kolbeninnenraum unterschiedlich groß ausgebildet sein, um eine optimale Kraftabstimmung und Druckabstimmung zwischen der Luftdruckveränderung der Luftfeder und der Dämpferhärtegradveränderung des Dämpferelementes zu erhalten.

Gemäß einer bevorzugten Ausführungsform weist der Kolben mindestens eine Durchgangsöffnung als Luftströmungsverbindung zwischen einer ersten und einer zweiten Kolbeninnenkammer auf, wobei die erste und die zweite Kolbeninnenkammer durch eine Kolbenbodenfläche voneinander getrennt sind. Die Kolbeninnenkammern verändern selbstverständlich ihre Größe in gegenseitiger Abhängigkeit davon, in welcher ein- oder ausgefahrenen Position sich der Kolben momentan befindet.

Durch die Verwendung einer derartigen Durchgangsöffnung ist es möglich, dass ein Benutzer beziehungsweise Fahrer des Fahrzeugsitzes den Kolben in eine Benutzerposition bringen kann, um eine gewisse Grundhärte beziehungsweise einen Grunddämpferhärtegrad des Dämpferelementes vorab einzustellen. Hierfür ist gemäß einer bevorzugten Ausführungsform an dem schwenkbaren Hebel ein Bowdenzug befestigt, der den Hebel in eine gewünschte Schwenkposition durch manuelle Betätigung verschwenken lässt. Hierdurch wird der Kolben, auch in Abhängigkeit auch von der Rückstellfeder, unterschiedlich weit ein- oder ausgefahren.

Eine derartige Vorabeinstellung eines gewünschten höheren Härtegrades des Dämpferelementes kann beispielsweise gewünscht sein, wenn das Fahrzeug mit hohen Beschleunigungen gefahren werden soll und hierdurch die Gefahr der Einleitung von großen Druckstößen beziehungsweise großen Schwingungen in das Fahrzeug, die Kabine und damit den Fahrzeugsitz entsteht. Durch die gezielte Verstellung des Kolbens mittels der Durchgangsbohrung wird zum Zeitpunkt des eingeleiteten Druckstoßes beziehungsweise der eingeleiteten Schwingung lediglich ein Differenzdruck zum Verstellen beziehungsweise Sichverändern der Kolbenbewegung und damit des Hebels während der Fahrt benötigt.

Vorteilhaft wird bei dem Gegenstand der vorliegenden Erfindung gleichzeitig mit Erhöhung des Luftdrucks innerhalb der Luftfeder und damit innerhalb der Luftdruckleitung/des Luftdruckschlauchs der Dämpferhärtegrad entsprechend proportional zu der Verschiebung des Kolbens der Ventileinrichtung erhöht. Für eine derartige Luftdruckerhöhung kommen im Wesentlichen zwei Zustände infrage:
1. Es findet ein Fahrerwechsel statt. Ein schwererer Fahrer, also ein Fahrer mit einem höheren Gewicht, setzt sich auf den Fahrzeugsitz, wodurch ein höherer Luftdruck in der zusammengedrückten Luftfeder entsteht. Dies hat zur Folge, dass dieser höhere Luftdruck zu einer Druckerhöhung innerhalb der Luftdruckleitung führt. Hieraus ergibt sich wiederum ein Ausfahren des Kolbens in der Ventileinrichtung, welches zu einem Schwenken beziehungsweise einer neuen Schwenkposition des schwenkbaren Hebelarms, der die Verstelleinrichtung des Dämpferelementes wiedergibt, führt. Dies hat zur Folge, dass der Dämpferhärtegrad zunimmt und sich automatisch an das Gewicht des neuen Fahrers anpasst.
2. Es findet eine Einleitung von unten in das System des Nutzfahrzeuges und damit des Fahrzeugsitzes zum Beispiel deswegen statt, weil momentan ein Schlagloch oder eine Erhebung durchfahren beziehungsweise überfahren wird. Dies hat zur Folge, dass eine kurzzeitige Druckstoßschwingung in den Fahrzeugsitz von au-ßen eingeleitet wird. Hierdurch wird das Unterteil in seiner Höhenabstandsbewegung relativ zu dem Oberteil bewegt, und deshalb findet eine Sitzfederungsbewegung statt. Auch in diesem Fall wird der Luftdruck innerhalb der Luftfeder, die eine Druckbeaufschlagung durch ein Zusammenfahren von dem Unterteil zu dem Oberteil erfährt, erhöht. Dies hat wiederum zur Folge, dass der Dämpferhärtegrad aufgrund der Kolbenbewegung und des Verstellens der Schwenkposition des schwenkbaren Hebels ebenso ansteigt. Somit findet eine relativ schnelle Reaktion des Dämpfelementes auf die Veränderung der Höhenabstandsbewegung von Oberteil zu Unterteil statt. Diese schnelle Reaktion beziehungsweise schnelle Veränderung des Dämpferhärtegrades hat zur Folge, dass selbst bei Durchfahren eines tiefen Schlagloches nicht die Endanschläge von Luftfeder und Dämpfer / Dämpferelement erreicht werden, da der Dämpfehärtegrad kurzfristig entsprechend erhöht worden ist. Somit wird der Fahrer davor bewahrt, in einen unteren Endanschlag des gesamten Systems zu gelangen beziehungsweise durchzufedern.

Gemäß einer bevorzugten Ausführungsform ist mindestens eine Drosselrückschlagventileinrichtung zwischen dem Luftfederausgang und der Verstelleinrichtung angeordnet, um bei einer Erniedrigung des Luftdrucks eine verzögerte Erniedrigung des Dämpferhärtegrads zu erhalten. Sofern das Drosselrückschlagventil derart geschaltet ist, dass es eine Drosselung beziehungsweise Verzögerung desjenigen Luftstromes bewirkt, der aus der Ventileinrichtung zurück zur Luftfeder geht und nicht andersherum, kann hierdurch erreicht werden, dass ein relativ hoch eingestellter Dämpferhärtegrad trotz starker Schwingungsbewegungen des Fahrzeugsitzes in gewünschter Weise aufrechterhalten wird. Denn wenn ein Fahrzeugsitz aufgrund einer Schlaglochdurchfahrung in die untere Position ausgelenkt wird, findet - wie bereits beschrieben - eine Erhöhung des Dämpferhärtegrades statt. Anschließend findet eine nach oben gerichtete Federschwingung des Fahrzeugsitzes aufgrund des sich hieraus ergebenden Federvorganges statt. Dies hat zur Folge, dass die Luftfeder entlastet wird und demzufolge die Luft aus der Ventileinrichtung über den Luftdruckschlauch zurück zur Luftfeder strömen möchte. Hieraus ergibt sich eine starke Verminderung des Dämpferhärtegrades. Wenn jedoch diese zurückströmende Luft über ein Drosselrückschlagventil gedrosselt beziehungsweise verzögert wird, bleibt für eine gewisse Zeit der hohe Dämpferhärtegrad aufrechterhalten. Dieser Umstand kann verhindern, dass bei dem sich anschließenden Nach-oben-Schwingen des Fahrzeugsitzes der obere Endanschlag sowohl des Dämpferelementes als auch der Feder erreicht wird, da der Dämpfer dieser Bewegung aufgrund des hohen Härtegrades entgegenwirkt. Aufgrund der Drosselwirkung des Drosselrückschlagventiles kann somit die Wirkung des sich anschließenden Nach-oben-Schwingens des Fahrzeugsitzes stark reduziert werden.

Selbstverständlich werden der Luftdruckschlauch und die Ventileinrichtung in ihren Abmessungen derart ausgewählt, dass eine optimale Wirkung der gegenseitigen Abhängigkeit des sich verändernden Luftdrucks in der Luftfeder und des Dämpferhärtegrades erreicht wird. Sowohl der Durchmesser des Luftdruckschlauches als auch dessen Länge können die Schnelligkeit beziehungsweise Verzögerung der Dämpferhärtegradeinstellung des Dämpferelementes beeinflussen. Ebenso ist eine Federhärte der Rückstellfeder der Ventileinrichtung entsprechend auszuwählen.

Erfindungsgemäß kann somit eine Dämpfereinstellung hinsichtlich des Dämpferhärtegrades automatisch im jeweiligen Betriebszustand des Fahrzeuges und des Fahrzeugsitzes entsprechend eingeleiteter Druckstoßschwingungen angepasst werden.

Weitere vorteilhafte Ausführungsformen ergeben sich aus den Unteransprüchen und der nachfolgenden Beschreibung in Verbindung mit der Zeichnung. Hierbei zeigen:
- Fig.1: in einer schematischen Seitendarstellung ein Fahrzeugsitz gemäß einer Ausführungsform der Erfindung;
- Fig.2: in einer Ausschnittsdarstellung die Luftfeder und ein Dämpferelement gemäß dem Erfindungsgegenstand;
- Fig.3: ein Dämpferelement zur Verwendung für den Gegenstand der vorliegenden Erfindung;
- Fig.4: in einer Ausschnittsdarstellung das Dämpferelement im eingebauten Zustand des erfindungsgemäßen Fahrzeugsitzes; und
- Fig.5: in einer schematischen Darstellung Ventileinrichtungen, wie sie bei dem Gegenstand der vorliegenden Erfindung verwendet werden können.

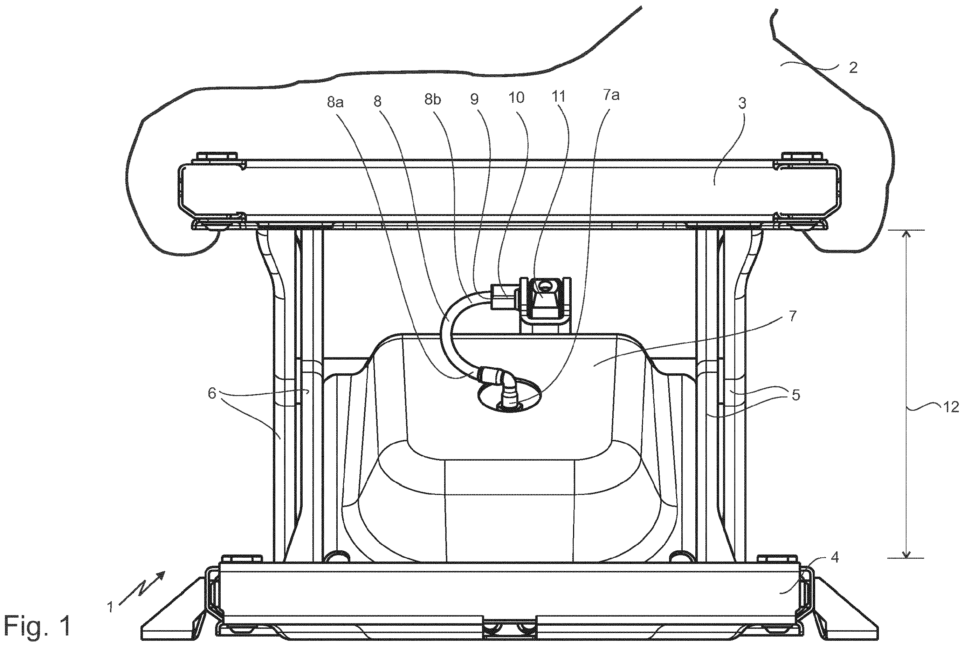

In Fig.1 ist ein Fahrzeugsitz 1 mit einem Polster 2, welches nur ausschnittsweise dargestellt ist, wiedergegeben. Ein Oberteil 3 sowie ein Unterteil 4 sind mittels dazwischen angeordneter Scherenarme 5 und 6 zueinander schwingbar angeordnet und können in ihrem Höhenabstand 12 aufgrund von Federungs- und Schwingungsbewegungen verändert werden.

Eine mittig angeordnete Luftfeder 7 dient zur Abfederung der Schwingungsbewegung von dem Oberteil relativ zu dem Unterteil. Die Luftfeder 7 weist einen Luftfederausgang 7a auf, an dem erfindungsgemäß ein Luftdruckschlauch 8 mit einem ersten Ende 8a angeordnet ist. Dieser Luftdruckschlauch 8 ist mit seinem zweiten Ende 8b an einer Ventileinrichtung 10 befestigt. Hierfür weist die Ventileinrichtung 10 einen Eingang 9 auf.

Die Ventileinrichtung 10 ist mittels Halteeinrichtungen mit einem Dämpferelement 11 verbunden.

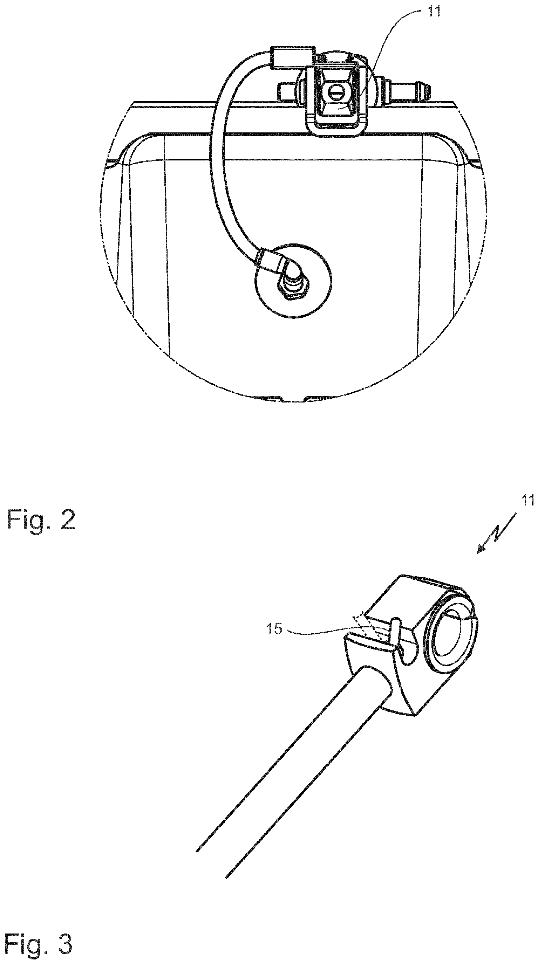

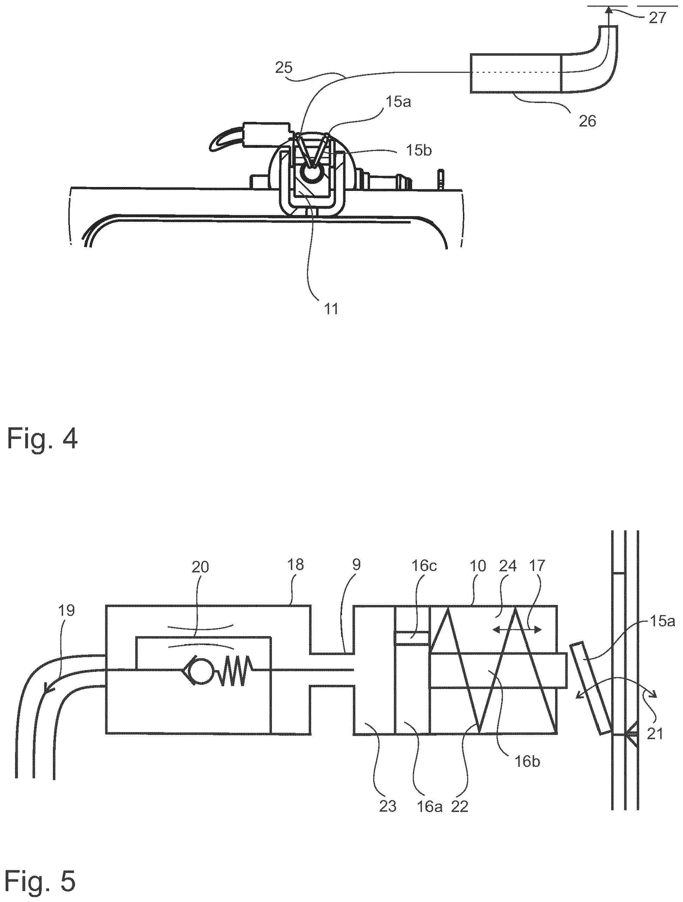

In Fig.2 ist eine Ausschnittsdarstellung des erfindungsgemäßen Fahrzeugsitzes im Bereich der Luftfeder und des Dämpferelementes wiedergegeben. Diese Darstellung soll zusammen mit dem in Fig.3 gezeigten Dämpferelement und der in Fig.4 dargestellten Ausschnittsdarstellung eines eingebauten Dämpferelementes näher betrachtet werden.

Wie diesen Darstellungen zu entnehmen ist, weist die Luftfeder eine Luftdruckverbindung mit der Luftdruckleitung 8 zu dem Dämpferelement 11 auf. Bevor die Luftdruckleitung 8 in das Dämpferelement 11 einmündet, ist erfindungsgemäß eine Ventileinrichtung 10 angeordnet, die unter Bezugnahme auf Fig.5 noch näher erläutert wird.

Das Dämpferelement weist einen Hebelarm 15 auf, wie er in Fig.3 näher dargestellt ist.

Die momentane Schwenkposition des Hebels 15 entspricht einer zugeordneten Dämpferhärtegradeinstellung des Dämpferelementes 11.

Sofern dieser Hebelarm mittels eines Kolbens 16a, 16b - wie in Fig.5 gezeigt - ausgelenkt wird, indem dieser Kolben nach außen oder nach innen gefahren wird, findet eine Veränderung der Schwenkbewegung 21 statt. Dies hat zur Folge, dass der Dämpferhärtegrad verändert wird.

In Fig.4 sind zwei verschiedene Schwenkpositionen 15a und 15b des Schwenkhebels 15 bzw Hebelarms 15 wiedergegeben. Zudem ist in dieser Darstellung gezeigt, dass ein Bowdenzug 25 mit dem Schwenkhebel verbunden ist, um mittels einer Haltevorrichtung 26, die den Bowdenzug 25 führen soll, den Schwenkhebel 15 von Hand in verschiedene Schwenkpositionen bringen zu können. Hierfür kann beispielsweise an dem Bowdenzug gemäß Pfeil 27 gezogen werden. Dies hat zur Folge, dass eine Voreinstellung des Dämpferhärtegrades stattfindet.

In Fig.5 ist die Ventileinrichtung 10 wiedergegeben, an deren Ausgang beziehungsweise Eingang 9 zusätzlich ein Drosselrückschlagventil 18 angebracht ist, welches eine Drosselstrecke 20 und einen Rückschlagabschnitt aufweist. Wenn die Luft aufgrund einer Dekomprimierung der Luftfeder wieder zurück von der Ventileinrichtung 10 zu der Luftfeder fließen würde, wie es gemäß dem Pfeil 19 dargestellt ist, findet eine Luftstrom-Drosselung über die Drosselstrecke 20 statt. Dies hat zur Folge, dass eine Reduzierung des Dämpferhärtegrades stark verzögert wird. Hieraus kann sich eine gewünschte Beibehaltung des Dämpferhärtegrades bis zu einem gewissen Zeitraum ergeben.

Die Ventileinrichtung 10 weist eine erste Kolbeninnenkammer 23 und eine zweite Kolbeninnenkammer 24 auf, die durch den Kolbenboden 16a voneinander getrennt sind. Vorzugsweise sind beide Kammern 23, 24 mittels einer Durchgangsbohrung 16c innerhalb des Kolbenbodens miteinander verbunden, um gezielt eine Anordnung des Kolbens innerhalb der Ventileinrichtung voreinstellen zu können. Dies kann beispielsweise mittels des in Fig.4 gezeigten Bowdenzuges 25 stattfinden.

Zudem ist eine Rückstellfeder 22 in der Ventileinrichtung 10 vorhanden, welche die Aufgabe hat, dass bei Nachlassen des Luftdrucks innerhalb der Luftdruckleitung 8 automatisiert der Kolben wieder eingefahren wird und sich in dieser Darstellung nach links bewegt. Eine Hin- und Herbewegung beziehungsweise ein Ein- und Ausfahren des Kolbens wird durch den Doppelpfeil 17 wiedergegeben. Bei einem Zurückfahren bewegt sich das Dämpferelement und damit der Hebelarm 15a in seine linke Ausgangsstellung. Dies wird durch den Schwenkpfeil 21 wiedergegeben.

### Bezugszeichenliste

- 1: Fahrzeugsitz
- 2: Polster
- 3: Oberteil
- 4: Unterteil
- 5: Scherenarm
- 6: Scherenarm
- 7: Luftfeder
- 7a: Luftfederausgang
- 8: Luftdruckschlauch / Leitung / Luftdruckleitung
- 8a: erstes Ende
- 8b: zweites Ende
- 9: Eingang
- 10: Ventileinrichtung
- 11: Dämpferelement
- 12: Höhenabstandsbewegung / Höhenabstand
- 15: Verstelleinrichtung / schwenkbarer Hebelarm / Hebel / Schwenkhebels
- 15a: wählbare Schwenkposition
- 15b: wählbare Schwenkposition
- 16a: Kolbenbodenfläche/ Kolbenboden
- 16b: Kolben
- 16c: Durchgangsöffnung / Durchgangsbohrung
- 17: Ein- und Ausfahrrichtungen
- 18: Drosselrückschlagventileinrichtung / Drosselrückschlagventil
- 19: Pfeil
- 20: Drosselstrecke
- 21: Schwenkbewegung
- 22: Rückstellfeder
- 23: erste Kolbeninnenkammer
- 24: zweite Kolbeninnenkammer
- 25: Bowdenzug
- 26: Haltevorrichtung
- 27: Pfeil

## Patentansprüche

1. Fahrzeugsitz, insbesondere für Nutzfahrzeuge, mit einem Oberteil (3) und einem Unterteil (4) und mit mindestens einer Luftfeder (7), die eine federnde Wirkung auf eine zwischen Ober- und Unterteil (3, 4) sich verändernde Höhenabstandsbewegung (12) ausübt, und mit mindestens einem Dämpferelement (11), das die sich verändernde Höhenabstandsbewegung (12) dämpft,
**dadurch gekennzeichnet, dass**
die Luftfeder (7) an einem Luftfederausgang (7a) mit einer Verstelleinrichtung (15) zum Verstellen eines Dämpferhärtegrads des Dämpferelementes (11) verbunden ist, wobei der Dämpferhärtegrad mittels eines Luftdrucks der Luftfeder (7) einstellbar und veränderbar ist.

2. Fahrzeugsitz nach Anspruch 1,
**dadurch gekennzeichnet, dass**
die Verstelleinrichtung (15) ein an dem Dämpferelement (11) angebrachter, schwenkbarer Hebelarm (15) ist, dessen momentane Schwenkposition (15a, 15b) jeweils einem Dämpferhärtegrad des Dämpferelementes (11) zugeordnet ist.

3. Fahrzeugsitz nach Anspruch 1 oder 2,
**dadurch gekennzeichnet, dass**
zwischen dem Luftfederausgang (7a) und der Verstelleinrichtung (15) ein Luftdruckschlauch (8) mit einem ersten Ende (8a) an dem Luftfederausgang (7a) und einem zweiten Ende (8b) an einem Eingang (9) einer Ventileinrichtung (10) angeordnet ist.

4. Fahrzeugsitz nach Anspruch 3,
**dadurch gekennzeichnet, dass**
die Ventileinrichtung (10) mindestens einen Kolben (16a, 16b), der durch Ein- und Ausfahren (17) den schwenkbaren Hebelarm (15) in seiner Schwenkposition (15a, 15b) verändert, und eine Rückstellfeder (22) zum selbstständigen Einfahren des Kolbens (16a, 16b) bei Unterschreiten einer voreinstellbaren Untergrenze des Luftdrucks in dem Luftdruckschlauch (8) aufweist.

5. Fahrzeugsitz nach Anspruch 4,
**dadurch gekennzeichnet, dass**
der Kolben (16a, 16b) mindestens eine Durchgangsöffnung (16c) als Luftströmungsverbindung zwischen einer ersten und einer durch eine Kolbenbodenfläche (16a) davon getrennten zweiten Kolbeninnenkammer (23; 24) aufweist.

6. Fahrzeugsitz nach einem der vorangegangenen Ansprüche,
**dadurch gekennzeichnet, dass**
mindestens eine Drosselrückschlagventileinrichtung (18) zwischen dem Luftfederausgang (7a) und der Verstelleinrichtung (15) angeordnet ist, um bei einer Erniedrigung des Luftdrucks eine verzögerte Erniedrigung des Dämpferhärtegrads zu erhalten.

7. Fahrzeugsitz nach einem der Ansprüche 2-6,
**gekennzeichnet durch**
einen Bowdenzug (25) zum händischen Voreinstellen einer wählbaren Schwenkposition (15a, 15b) des schwenkbaren Hebelarms (15), wobei der Bowdenzug (25) an dem Hebel (15) befestigt ist.

8. Fahrzeugsitz nach einem der Ansprüche 4-7,
**dadurch gekennzeichnet, dass**
ein Durchmesser und/oder eine Länge des Luftdruckschlauches (8) veränderbar und eine Federrate der Rückstellfeder (22) einstellbar sind.
